# EUROPEAN PATENT APPLICATION

(11) **EP 2 819 438 A1**
(43) Date of publication of application: **31.12.2014**
(21) Application number: 13758705.1
(22) Date of filing: 21.02.2013
(51) Int. Cl.: H04W 4/12

(54) **SPAM MESSAGE PROCESSING METHOD AND SYSTEM**

(30) Priority: 08.03.2012 CN 201210059492
(71) Applicant: ZTE Corporation, Shenzhen, Guangdong 518057 (CN)
(72) Inventor: LU, Yan, Shenzhen Guangdong 518057 (CN); DING, Xin, Shenzhen Guangdong 518057 (CN)
(74) Representative: Brevalex
(86) International application number: PCT/CN2013/071742
(87) International publication number: WO 2013/131429

(57) **Abstract**

Disclosed is a spam message processing method, comprising: arranging a spam message storage unit on a media message server, the media message server receiving a spam reporting message from a media message client, and the spam reporting message at least carrying a spam message identifier; and the media message server storing related information about corresponding spam message in the spam message storage unit according to the spam reporting message. Also correspondingly disclosed is a spam message processing system. The present invention can effectively avoid the interference of spam messages on users, and improve user experience.

## Description

### TECHNICAL FIELD

The disclosure relates to the field of communication, and in particular to a method and system for processing a spam.

### BACKGROUD

With the development of communication techniques, especially of Internet techniques, it has become an indispensable part of daily production and life to communicate by media message services such as E-mails or voicemails. Media message services such as E-mails and voicemails are easy to use, by which a sent message may carry various multimedia files such as texts, images, audios, and videos, bringing rich communication experience to a user. Currently, a user may receive and send such E-mails or voicemails carrying various multimedia files anytime anywhere through a mobile terminal at hand.

However, in recent years, E-mails are used by some people especially some advertisers for spreading advertisements, electronic publications or other data. Although capable of providing a user with some useful information at times, such uninvited "spam mails" received in large numbers will inevitably occupy network bandwidths and storage resources of a user's mail box, wasting time, effort and even money of a recipient. Some spam mails further spread false information or other harmful information, posing a hazard to people's lives.

Voice mail, as a new service, also will face troubles caused by spam messages. Therefore, an important research topic at present is to find a solution for effectively processing such spams to minimize disturbance to a user.

### SUMMARY

In view of this, it is desired that embodiments of the disclosure provide a method and system for processing a spam, capable of effectively preventing disturbance of spams to a user, thus enhancing user experience.

To this end, a technical solution of embodiments of the disclosure is implemented as follows.

An embodiment of the disclosure provides a method for processing a spam, including steps of:
receiving, by a media message server, a spam report from a media message client, wherein the spam report carries at least an identifier of a spam; and
storing, by the media message server, spam-related information into a spam storage unit according to the spam report, where the spam storage unit is configured in the media message server.

In an embodiment, the method may further include a step of:
reporting, by the media message server, the spam-related information stored in the spam storage unit to a spam control system.

In an embodiment, the spam report may be a COPY instruction or an APPEND instruction based on an Interactive Mail Access Protocol IMAP.

In an embodiment, when the spam report is an APPEND instruction, the spam report may further carry a type of the spam;
when the spam report is a COPY instruction, the spam storage unit configured in the media message server may be further divided into a plurality of spam storage sub-units according to spam classification, and the media message server may directly copy a media message into a spam storage sub-unit according to an operation of a user.

In an embodiment, the spam-related information may include one or more of: the identifier of the spam, a type of the spam, a size of the spam, a sender of the spam, a receiver of the spam, a theme of the spam, an abstract of the spam, and content of the spam.

An embodiment of the disclosure further provides a system for processing a spam, including a media message server and a media message client, where the media message server further includes a spam report reception unit and a spam storage unit,
the spam report reception unit is configured to: receive from the media message client a spam report carrying at least an identifier of a spam; and store spam-related information in the spam storage unit according to the spam report; and
the spam storage unit is configured to store the spam-related information.

In an embodiment, the system may further include a spam control system, where the media message server may further include a spam reporting unit configured to
report the spam-related information stored in the spam storage unit to the spam control system.

In an embodiment, the spam report reception unit may be configured to receive a COPY instruction or an APPEND instruction based on an Interactive Mail Access Protocol IMAP.

In an embodiment, when the spam report is a COPY instruction, the spam storage unit may be further divided into a plurality of spam storage sub-units according to spam classification; when the spam report is an APPEND instruction, the APPEND instruction received by the spam report reception unit may further carry a type of the spam.

In an embodiment, the spam-related information may include one or more of: the identifier of the spam, a type of the spam, a size of the spam, a sender of the spam, a receiver of the spam, a theme of the spam, an abstract of the spam, and content of the spam.

With the method and system for processing a spam according to embodiments of the disclosure, a spam storage unit is configured in a media message server, which reports spam-related information stored in the spam storage unit to a spam control system. With the disclosure, spam-related information can be reported by a media message server in time, such that a spam control system may perform related processing, thereby effectively preventing disturbance of spams to a user and enhancing user experience.

### BRIEF DESCRIPTION OF THE DRAWINGS

Fig.1 is a flow chart of a method for processing a spam according to the disclosure;
Fig.2 is a schematic diagram of a structure of a system for processing a spam according to the disclosure;
Fig.3 is a schematic diagram of architecture of a system according to embodiment 1 of the disclosure;
Fig.4 is a schematic diagram of a storage unit allocated to a user within a media message server according to embodiment 1 of the disclosure; and
Fig.5 is a signaling flow chart according to embodiment 1 of the disclosure.

### DETAILED DESCRIPTION

According to embodiments of the disclosure, a spam storage unit is configured in a media message server; the media message server receives from a media message client a spam report carrying at least an identifier of a spam, and stores spam-related information in the spam storage unit according to the spam report.

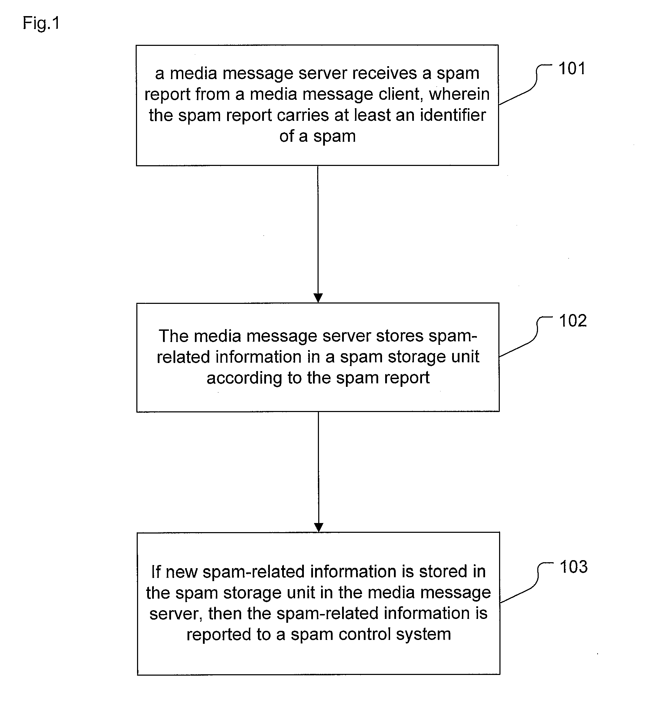

Fig.1 is a flow chart of a method for processing a spam according to an embodiment of the disclosure. As shown in Fig.1, the method includes steps as follows.

In Step 101, a media message server receives from a media message client a spam report carrying at least an identifier of a spam.

In Step 102, the media message server stores spam-related information in a spam storage unit according to the spam report.

In order to implement the disclosure, it is required to configure, for a user, in a media message server a spam storage unit for storing spam-related information. After being authenticated through the media message client optionally through for example an existing Interactive Mail Access Protocol (IMAP) authentication mechanism, the user may access the spam storage unit.

Optionally, the method may further include a step as follows.

In Step 103, the media message server reports the spam-related information stored in the spam storage unit to a spam control system.

Optionally, if new spam-related information is stored in the spam storage unit in the media message server, then the media message server reports the spam-related information to the spam control system.

Optionally, the media message server reports spam-related information stored in the spam storage unit regularly or in batches.

Optionally, the spam report received by the media message server from the media message client is a COPY instruction or an APPEND instruction based on an IMAP.

Optionally, the spam storage unit configured in the media message server is further divided into multiple spam storage sub-units according to spam classification.

When the spam report is an APPEND instruction, the spam report further carries the type of the spam.

When the spam report is a COPY instruction, the spam storage unit configured in the media message server is further divided into a plurality of spam storage sub-units according to spam classification, and the media message server directly copies a media message into a spam storage sub-unit according to an operation of a user.

In an embodiment of the disclosure, the spam-related information may include one or more of: the identifier of the spam, a type of the spam, a size of the spam, a sender of the spam, a receiver of the spam, a theme of the spam, an abstract of the spam, and content of the spam.

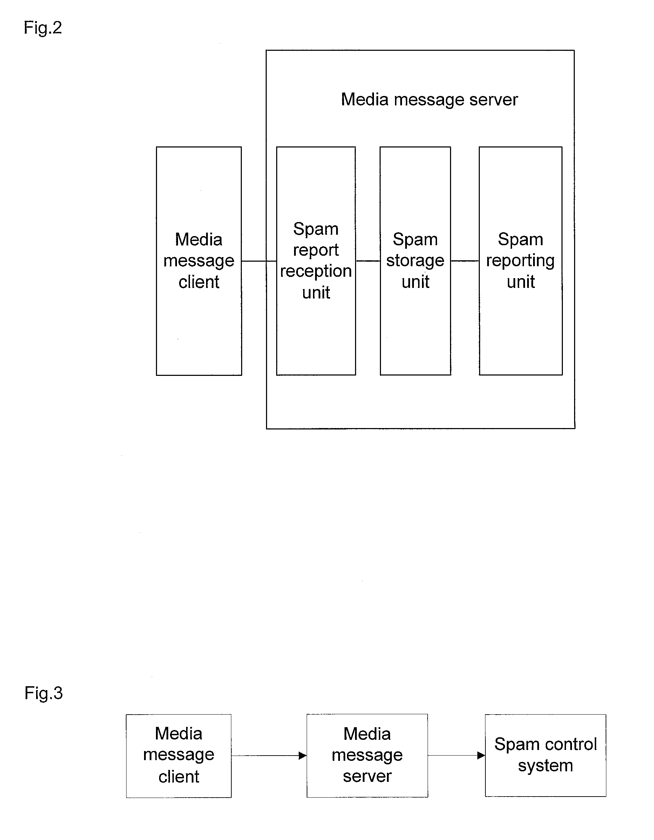

Accordingly, embodiments of the disclosure also provide a system for processing a spam. As shown in Fig.2, the system includes a media message server and a media message client, wherein the media message server further includes a spam report reception unit and a spam storage unit.

The spam report reception unit is configured to: receive from the media message client a spam report carrying at least an identifier of a spam; and store spam-related information in the spam storage unit according to the spam report.

The spam storage unit is configured to store the spam-related information.

The system further includes a spam control system, and the media message server further includes a spam reporting unit.

The spam reporting unit is configured to report the spam-related information stored in the spam storage unit to the spam control system.

The spam report reception unit is configured to receive a COPY instruction or an APPEND instruction based on an IMAP.

Optinally, when the spam report is a COPY instruction, the spam storage unit is further divided into multiple spam storage sub-units according to spam classification. When the spam report is an APPEND instruction, the APPEND instruction received by the spam report reception unit further carries the type of the spam.

The spam-related information may include one or more of: the identifier of the spam, a type of the spam, a size of the spam, a sender of the spam, a receiver of the spam, a theme of the spam, an abstract of the spam, and content of the spam.

A technical solution of the disclosure will be further elaborated below in combination with accompanying drawings and specific embodiments.

### Embodiment 1

Architecture of a system according to embodiment 1 of the disclosure is as shown in Fig.3. The system includes a media message client, a media message server and a spam control system of a service provider. The media message client interacts with the media message server through an Internet Message Access Protocol (IMAP); a user may manage a media message stored in the media message server through the media message client; a user may report a spam to the spam control system of a service provider through interaction between the media message client and the media message server; the spam control system prevents, according to the spam reported by the user, a sender of the spam from sending more spams.

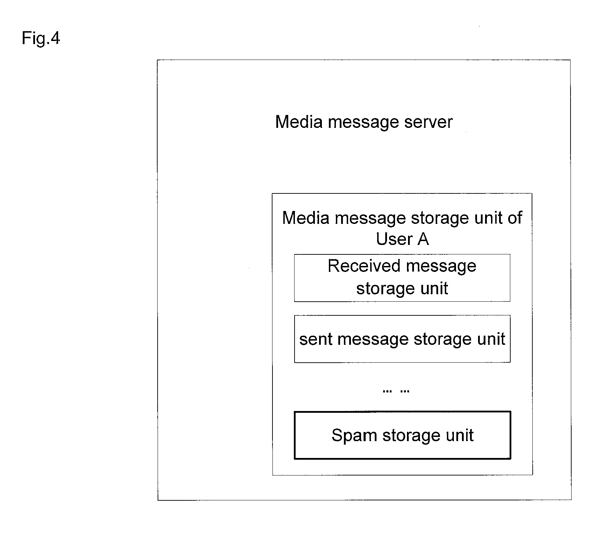

A storage unit allocated to a user within the media message server is as shown in Fig.4. A media message storage unit of a user can store a received media message and a sent media message as needed. The media message client manages a media message stored in the media message storage unit through an IMAP. It is put forward in a solution of the disclosure that a spam storage unit is further added for a user in the media message storage unit; after information on a new media message (i.e., spam) is stored in the spam storage unit, within a certain period of time the server will automatically treat the media message as a spam, and report information on the media message to the spam control system of a service provider; the client can request through an IMAP COPY instruction to dump another message in the media message storage unit into the spam storage unit, and the dumped message may then be reported as a spam.

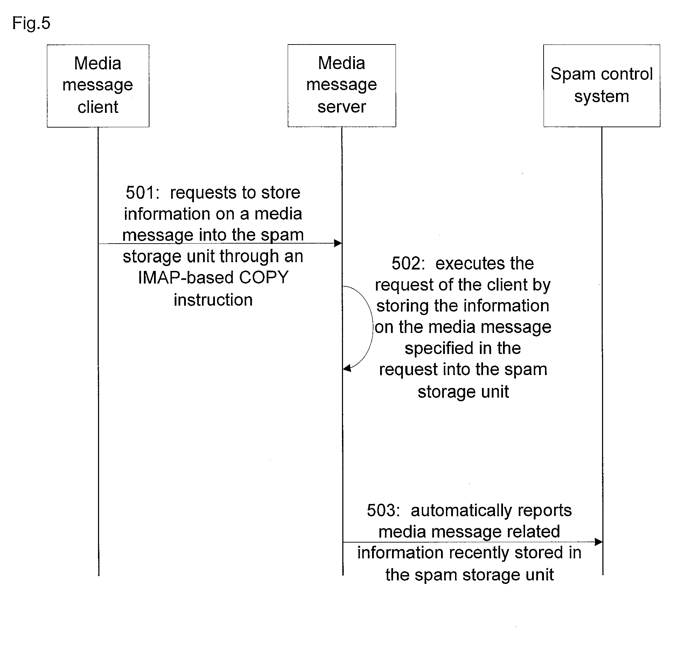

A signaling flow according to embodiment 1 of the disclosure, as shown in Fig.5, specifically includes steps as follows.

In Step 501, after a media message client of a user is successfully authenticated, if the user determines that a media message is a spam by downloading (through an IMAP FETCH instruction) part of information on the media message, such as a title and a sender of the message, then the user requests to report the spam. The media message client of the user sends an IMAP COPY instruction to a home media message server of the client. The IMAP COPY instruction carries an identifier of the media message to be reported and an identifier of a spam storage unit of the user corresponding to the type of the spam.

In Step 502, after receiving the COPY instruction, the media message server executes the COPY instruction; the media message server searches the media message storage unit of the user for the media message specified in the COPY instruction, and copies information on the media message and stores the copied information into the spam storage unit of the user.

In Step 503, after detecting that new media message related information appears in the spam storage unit of the user, the media message server automatically reports, through an existing technique, the media message related information to the spam control system of a service provider. The spam control system prevents, through an existing technique, a sender of the spam from sending any more spam according to the reported spam.

It can be seen that with a solution provided by embodiments of the disclosure, when finding that a spam is received, instead of downloading the spam to the local and uploading the spam again, a user may report the spam directly through a media message server.

What described are merely embodiments of the disclosure, and are not intended to limit the scope of the disclosure.

## Claims

1. A method for processing a spam, comprising steps of:
receiving, by a media message server, a spam report from a media message client, wherein the spam report carries at least an identifier of a spam; and
storing, by the media message server, spam-related information into a spam storage unit according to the spam report, wherein the spam storage unit is configured in the media message server.

2. The method according to claim 1, further comprising a step of:
reporting, by the media message server, the spam-related information stored in the spam storage unit to a spam control system.

3. The method according to claim 1, wherein the spam report is a COPY instruction or an APPEND instruction based on an Interactive Mail Access Protocol IMAP.

4. The method according to claim 3, wherein
when the spam report is an APPEND instruction, the spam report further carries a type of the spam;
when the spam report is a COPY instruction, the spam storage unit configured in the media message server is further divided into a plurality of spam storage sub-units according to spam classification, and the media message server directly copies a media message into a spam storage sub-unit according to an operation of a user.

5. The method according to any one of claims 1 to 4, wherein the spam-related information comprises one or more of: the identifier of the spam, a type of the spam, a size of the spam, a sender of the spam, a receiver of the spam, a theme of the spam, an abstract of the spam, and content of the spam.

6. A system for processing a spam, comprising a media message server and a media message client, wherein the media message server further comprises a spam report reception unit and a spam storage unit,
the spam report reception unit is configured to: receive from the media message client a spam report carrying at least an identifier of a spam; and store spam-related information in the spam storage unit according to the spam report; and
the spam storage unit is configured to store the spam-related information.

7. The system according to claim 6, further comprising a spam control system, wherein the media message server further comprises a spam reporting unit configured to
report the spam-related information stored in the spam storage unit to the spam control system.

8. The system according to claim 7, wherein
the spam report reception unit is configured to receive a COPY instruction or an APPEND instruction based on an Interactive Mail Access Protocol IMAP.

9. The system according to claim 8, wherein when the spam report is a COPY instruction, the spam storage unit is further divided into a plurality of spam storage sub-units according to spam classification; or when the spam report is an APPEND instruction, the APPEND instruction received by the spam report reception unit further carries a type of the spam.

10. The system according to any one of claims 6 to 9, wherein the spam-related information comprises one or more of: the identifier of the spam, a type of the spam, a size of the spam, a sender of the spam, a receiver of the spam, a theme of the spam, an abstract of the spam, and content of the spam.
